# EUROPEAN PATENT SPECIFICATION

(11) **EP 1 342 567 B1**
(45) Date of publication and mention of the grant of the patent: **05.04.2006**
(21) Application number: 01980992.0
(22) Date of filing: 07.11.2001
(51) Int. Cl.: B32B 27/32, B32B 27/00, B32B 27/08, B32B 27/10

(54) **LAMINATE FOR PACKAGING MATERIAL**
LAMINAT FÜR VERPACKUNGSMATERIAL
LAMINE POUR MATERIAU D'EMBALLAGE

(30) Priority: 09.11.2000 JP 2000342262
(43) Date of publication of application: 10.09.2003
(73) Proprietor: Tetra Laval Holdings & Finance S.A., 1009 Pully (CH)
(72) Inventor: FRISK, Peter, c/o NIHON TETRA PAK K.K., Tokyo 102-8544 (JP); OGITA, Hiroaki, c/o NIHON TETRA PAK K.K., Tokyo 102-8544 (JP); IKENOYA, Tadakatsu, c/o NIHON TETRA PAK K.K., Tokyo 102-8544 (JP); ANDERSSON, Thorbjorn, S-240 17 Sondra Sandby (SE); LETH, Ib, S-273 64 Kavlinge (SE)
(74) Representative: Müller, Frank Peter
(86) International application number: PCT/JP2001/009709
(87) International publication number: WO 2002/038379

(56) References cited:
- EP-A2- 0 972 634
- WO-A-00/44632
- JP-A- 8 134 794
- JP-A- 2000 062 109
- DATABASE WPI Section Ch, Week 199634 Derwent Publications Ltd., London, GB; Class A18, AN 1996-336293 XP002295343 & JP 08 134794 A (MITSUI PETROCHEM IND CO LTD) 28 May 1996 (1996-05-28)

## Description

This invention relates to the laminate for packaging material. This invention relates to the laminate for packaging material suitable for packaging of liquids, such as liquid food, in more detail.

Conventionally, the laminate of the paper as a core and plastic films, such as polyethylene, polypropylene, polyester, and polyvinyl chloride, is used for the packaging material for liquid food etc.
In order to protect the liquid packed inside, barrier layers, such as aluminum foil, are usually prepared in the inner side of the packaging material.
Moreover, in order to protect the barrier layer, the plastic layer of the innermost layer of packaging material is provided through the adhesive layer.

In case the packaging container is produced from the packaging material, in order to produce easily it, the polyethylene with the comparatively better adhesiveness and the comparatively lower melting point, especially low density polyethylene are generally used for the plastic layer of the innermost layer.

However, since the low-density polyethylene does not have enough intensity, its integrity of the packaging container is bad.
In the opening device of the packaging container in which a junction part (for example, a sealing tab) of the low-density polyethylene is torn, and from which liquid contents are poured, it is hard to tear off the junction part. The openability of the packaging container is poor.

The purpose of this invention is offering the packaging material from which a packaging container having the good integrity and a packaging container having the excellent openability are obtained, in the packaging material for liquid food which has at least the paper layer and the inner barrier layer.
The inventors improved the above-mentioned problems in order to attain the purpose of this invention. Accordingly, in packaging materials which have a paper layer and a barrier layer on the inside of the paper layer, a polycycloolefin copolymer containing polyethylene layer as described in claim 1 is provided through an adhesive layer on the inside of the barrier layer, and an innermost layer of the linear low density polyethylene obtained by the polymerization using metallocene catalysts is provided further inside.
In addition, in this invention, the "inner layer" means the layer of the side which contacts the content when packaging the content to be filled using the laminate for packaging material, and the "outer layer" means the layer by the side of opposite. Moreover, the "inside" means the side near the content to be filled when packaging the content to be filled. The "outside" means the opposite side to the inside.

The summary of this invention is the laminate for packaging material which comprises of the outer layer including at least the paper layer, and the inner layer including a laminate of the barrier layer, the adhesive layer, the polycycloolefin copolymer containing polyethylene layer as described in claim 1, and the linear low density polyethylene innermost layer obtained by using the metallocene catalyst. Thus, the linear low-density polyethylene-containing layer forms the innermost layer of the inner layer.

The laminate for packaging material of this invention is characterized by the outer layer having the thermoplastic resin layer on the outside of the paper layer.

The laminate for packaging material of this invention is characterized by the outer layer having the thermoplastic resin layer on the inside of the paper layer.

The laminate for packaging material of this invention is characterized by that the polycycloolefin copolymer-containing polyethylene layer contains a polyethylene having the density of more than 0.910 (g/cm³), and the melt flow index of 5-25 (g /10 minutes).

The laminate for packaging material of this invention is characterized by that the linear low density polyethylene layer comprises linear low density polyethylene having the density of 0.900-0.925 (g/cm³), the melt flow index of 10-20 (g /10 minutes), and 1.4 or more swell ratios.

The outer layer of the laminate for packaging material of this invention has at least a paper layer. The usual paper having the weight of 50 - 350 (g/m²) can be used for the paper layer.

The outer layer has at least the paper layer, moreover and it may have the structure in which the one or more other layers are provided on the outside of the paper layer, the structure in which the one or more other layers are provided on the inside of the paper layer, and the structure in which the one or more other layers are provided on the outside and the inside of the paper layer. At least one of the above-mentioned "other layers" preferably includes a thermoplastic-resin film layer.

The thermoplastic resin includes polyolefin, nylon, polyester, polyvinyl chloride, etc. The polyolefin includes polyethylene, polypropylene, ethylene-propylene copolymer, polybutene-1 and etc. The nylon includes nylon 6, nylon 6-6, nylon-11, nylon-12 and etc. The polyester includes polyethylene terephthalate, polybutylene terephthalate and etc. The polyolefin is one of the desirable thermoplastic resins.

The polyethylene preferably includes high-density polyethylene, middle-density polyethylene, low density polyethylene, linear low density polyethylene and etc.

When providing the two or more thermoplastic-resin film layers, the thermoplastic-resin film layer may be the film layers of the same kind or the film layers of a different kind. The thickness of the thermoplastic-resin film layer is usually 5-200 micrometers. Furthermore, the outer layer may have, for example, a printing layer. The printing layer is formed with the usual ink by the usual printing method on the outside of the paper layer of the outer layer or, on the surface of a thermoplastic-resin film layer provided on the outside of the paper layer, if needed.

The barrier layer at the side of the outermost of the inner layer of the laminate for the packaging material of this invention is the barrier material monolayer or the multilayer structure containing barrier material. The barrier material includes an aluminum foil, silicon-oxide vapor deposited polyethylene terephthalate, ethylene-vinyl alcohol copolymer, nylon and etc. The multilayer structure containing the barrier material includes polyethylene film/ aluminum foil, adhesive polyethylene/ silicon-oxide vapor deposited polyethylene terephthalate biaxis-stretch film (/adhesive), polyethylene film/ adhesive/ ethylene-vinyl alcohol copolymer film/ adhesive, nylon resin film/ adhesive and etc. The thickness of the barrier layer is usually 5-25 micrometers.

The polyethylene of the polycycloolefin copolymer containing polyethylene layer of the inner layer of the laminate for the packaging material of this invention has the density of 0.910 (g/cm³) or more and the melt flow index of 5-25 (g/10 minutes). The low-density polyethylene and the linear low-density polyethylene with the density of 0.910 - 0.930 (g/cm³), and middle-density polyethylene with the density of 0.931 - 0.942 (g/cm³) are more suitable.

The polyethylene is mixed with other olefin polymers having compatibility with the polyethylene, especially polycycloolefin copolymer. Furthermore, the blend with the inorganic filler material is acceptable. The desirable contents of the polycycloolefin copolymer and/or the inorganic filler material has 1 - 50 wt% in the blend.

The polycycloolefin copolymer is a copolymer of polycycloolefin and ethylene

The polycycloolefin includes bicyclo [2, 2,1]-hept-2-ene and the derivative, tetracyclo [4, 4, 0, 1^{2,5}, 1^{7,10}]-3-dodecen and the derivative, hexacyclo [6, 6, 1, 1^{3,6}, 1^{10,13}, 0 ^{2,7}, 0 ^{9,14}]-4-heptadecene and the derivative, octacyclo [8, 8, 0,1^{2,9}, 1^{4,7}, 1^{11,10}, 1^{13,16}, 0^{3,8}, 0^{12,17}]1-5-docosene and the derivative, pentacyclo [6, 6, 1, 1^{3,6}, 0^{2,7}, 0^{9,14}]4-hexadecene and the derivative, pentacyclo [6, 5, 1, 1^{3,6}, 0^{2,7}, 0^{9,13}]-4-pentadecene and the derivative, heptacyclo [8, 7, 0, 1^{2,9}, 1^{4,7}, 1^{11, 17}, 0^{3,8}, 0^{12,15}]-5-heneicosene and the derivative, heptacyclo [8, 8, 0, 1^{2,9}, 1^{4,7}, 1^{11,16}, 0^{3,8}, 0^{12,17}]-5-heneicosene and the derivative, tricyclo [4, 4, 0, 1^{2,5}] -3-undecene and the derivative, tricyclo [4, 3, 0, 1^{2,5} ]-3-decene and the derivative, pentacyclo [6, 5, 1, 1^{3,6}, 0^{2,7}, 0^{9,13}]-4, 10-pentadecadiene and the derivative, pentacyclo [4, 7, 0, 1^{2,5}, 0^{8,13}, 1^{9,12}]-3-pentadecene and the derivative, heptacyclo [7, 8, 0, 1^{3,5}, 1^{2,7}, 1^{10,17}, 0^{11,16}, 0^{12,15}]-4-eicosen and the derivative, nonacyclo [10, 1, 1^{4,7}, 0^{3,8}, 0^{2,10}, 0^{12,21}, 1^{13,20}, 0^{14,19}, 0^{15,19}]-5-pentacecone, the derivative and, etc.

The copolymerization of the polycycloolefin and the olefin is usually performed at minus 50 - plus 150 degree C temperatures under existence or nonexistence of the organic solvent and etc., using the combination catalyst of transition-metal compounds, e.g. titanium, zirconium, vanadium, and hafnium, and organoaluminium compounds. The polycycloolefine copolymer obtained according to the above-mentioned copolymerization is the random copolymer of the polycycloolefin and ethylene. The random copolymer has 40 to 80 mole % of a polymer structural unit derived from the polycycloolefin.

The container formed from the laminate for packaging material having the inner layer of the mixture of the above-mentioned polyethylene and the above-mentioned polycycloolefin copolymer shows an advantages of, without any problem, folding in the temperatures of 70 or more degrees C and retort treatment at the temperatures in at least about 130 degrees C, etc.

The inorganic filler mixable with the above-mentioned polyethylene includes mica, talc, calcium sulfate, calcium carbonate and etc. The polyethylene layer thickness is usually 10-25 micrometers.

The adhesive layer which binds the above-mentioned barrier layer to the above-mentioned polyethylene layer includes ethylene-acrylic acid copolymer, ethylene-methacrylic-acid copolymer, ethylene-methyl methacrylate copolymer, ionomer, low density polyethylene, and the linear low density polyethylene manufactured by using the metallocene catalyst explained in detail later. The thickness of the adhesive layer is usually 4-10 micrometers.

The linear low density polyethylene manufactured by using the metallocene catalyst (henceforth mLLDPE) used for the innermost side of the inner layer of the laminate for packaging material of this invention is desirably manufactured under existence of the metallocene catalyst by copolymerizing ethylene and comonomer of 4-8 carbon alpha olefin, more desirably comonomer of six or more carbon alpha olefin, e.g. 1-hexene, 4-methyl-1-pentene, 1-heptene, and 1-octene.

The above-mentioned metallocene catalyst includes metallocene of a compound having a structure of transition metals, e.g. titanium, zirconium, and hafnium, sandwiched by unsaturated cyclic compound containing pi-electron cyclopentadienyl group or substituted cyclopentadienyl group, a catalyst combined the metallocene with co-catalysts, e.g. aluminum compounds, e.g. alkyl alminoxane, the alkyl aluminium, aluminum halide, and alkyl aluminum halide.

The molecular weight distribution of mLLDPE is as narrow as 2-4 at the weight average molecular weight/number average molecular weight. It's density is 0.900 - 0.925 g/cm³, desirably 0.900 - 0.915 g/cm³, more desirably 0.905 - 0.910 g/cm³. In the mLLDPE, melt flow index (MFI: 190 degree C, 2.16 (kg of loads) are 10-20 (g / 10 minutes), and swell ratio (SR) is 1.4 or more, especially 1.4-1.6. The highest melting point by differential thermal analysis is 88-103 degrees C, especially desirably 93-103 degrees C. The thickness of mLLDPE is usually 10-25 micrometers.

The laminate for packaging material of this invention is the laminate of the outer layer and the inner layer, binding the inner layer to the outer layer having at least the paper layer and the barrier layer of the above-mentioned. The method to bind and laminate the outer layer and inner layer includes a method to adhere the outer layer prepared in advance and the inner layer with adhesives, a method to laminate a thermofusionabible layer of the outer layer and/or the inner layer with a contacting layer by thermofusion, a method to simultaneously extrusion-mold the outer layer and/or the inner layer, a method to combine the above methods and the conventional method to manufacture the laminate.

From the laminate for packaging material of this invention, the packaging container having a shape of the rectangular parallelepipeds, e.g. the Tetra Brik (trademark) type, the rectangular parallelepipeds with a gable-top, e.g. the container containing one litter cow's milk, cube, cylinder form, prism, Tetra Prisma (trademark) that has sectional octagon in the body and sectional square at the top and the bottom, pouch, and conventionally well-known shapes.

### Example

Hereafter, the example describes this invention in detail.

### (Example 1)

The laminate of this invention was manufactured by heat adhesion of the outer layer of the kraft paper (weight: 220 g/m²) and, the following inner layer.
An aluminum foil (7 micrometers)/ an adhesive layer of ethylene-methyl methacrylate copolymer (4 micrometers)/ a film (17 micrometers) formed from the mixture of 70 wt.% low density polyethylene (density: 0.923 g/cm³, and MFI: 12 (g /10minutes)), and 30 wt.% polycycloolefin copolymer (60 mole % polycycloolefin component, 40 mole % ethylene component)/ a film (15 micrometers) comprising mLLDPE with density 0.908 g/cm³, MFI:16 (g/10 minutes), SR 1.5, and 98 degrees C of the highest melting points by differential thermal analysis. The mLLDPE film of the inner layer was the innermost layer of the laminate.

### (Example 2)

The outer layer provided low-density-polyethylene film (15 micrometers) on the outside of the paper layer of Example 1, and the inner layer used in Example 1 were adhered like Example 1, and the laminate of this invention was manufactured.

### (Example 3)

The outer layer having the linear low-density-polyethylene film (10 micrometers) on the inside of the paper layer of Example 1, instead of the film of the inner layer used in the Example 1, the inner layer of the film (17 micrometers) formed from mixture of 40 wt. % low density polyethylene (density 0.923 g/cm3, MFI: 12 g/10 minutes and 60 wt. % polycycloolefin copolymers (60 mole % polycycloolefin component, 40 mole % ethylene component) were adhered like Example 1 and the laminate of this invention was manufactured.

### (Example 4)

The outer layer having polypropylene film (20 micrometers) on the outside of the paper layer of Example 1 and low-density-polyethylene film (17 micrometers) on the inside and, instead of the aluminum foil of the inner layer used in Example 1, the inner layer obtained using the biaxis-stretch film (12 micrometers) of silicon-oxide vapor deposited polyethylene terephthalate were adhered like Example 1 and the laminate of this invention was manufactured.

### (Comparative Example)

The paper layer of Example 1 and the low-density-polyethylene film (30 micrometers) on the inside of the paper were adhered like Example 1, and the laminate was manufactured.

Using the laminate manufactured by Examples 1-4 and Comparative Example, the brick shape liquid food container containing 200ml were produced, were filled with the water, and the performance of the containers were estimated by the following ways:

### Integrity of Containers

Regarding the vibration examination (the JIS Z0232 A-1 method) to each 20 above-mentioned containers, the wrinkle and dent of the front surface, the back surface, the upper surface and the bottom surface and, the standing-up performance were observed visually. Moreover, the size of the container exterior was measured and the difference with the specification value was calculated.

Accordingly, with the container produced using the laminate manufactured in Examples 1-4, there was no wrinkle in the whole surface (however, there was the thin shadow in the front and the back), and the about 1-2mm dent was observed at the front and the back, and the about 1-2mm of the size difference was calculated compared with the specification value. On the other hand, with the container produced using the laminate manufactured by Comparative Example, the about 2-3mm wrinkle was observed on the front and the back, the about 2-3mm dent was observed on the front and the back. There was about 2-4mm size difference compared with the specification value. In addition, both have good standing-up performance.
Compared with the containers formed by using the conventional laminate concerning Comparative Example, the container formed by using the laminate concerning Examples showed excellent integrity.

### Openability

Regarding the opening examination, ten persons' panelist chosen at random examined to the water-filled container produced using the laminate manufactured by Examples 1-3 and Comparative Example. Compared with the container produced by Comparative Example, for the container prepared in Examples, one person estimated that it was very easy to open, the four persons estimated that it was easy to open, and the five persons estimated that it was equivalent. The result showed that the openability of the Example's containers were excellent.

### Advantage

In the container formed by using the laminate of this invention, the container comprising the linear low-density-polyethylene innermost layer obtained from the metallocene catalytic polymerization, and the polycycloolefine-copolymer containing layer has the good integrity, and it is excellent in the openability of the container.

According to the container formed by using the laminate of this invention, the stiffness, the gloss, transparency, scratch resistance, heat-resisting property, moisture resistance, etc. are improved by the polycycloolefine-copolymer containing polyethylene layer of the container wall over the plastics used conventionally. Thus, the aspect and appearance of the container are good.

The polycycloolefine-copolymer containing polyethylene layer has the good compatibility with the linear low-density-polyethylene layer in the inner layer of the laminate of this invention, and improves the adhesive property of the innermost layer. Accordingly, the container obtained shows the good sealability.

In the container formed by using the laminate of this invention, the container is excellent in the integrity with the laminations having, e.g. the polycycloolefine-copolymer containing polyethylene layer. Therefore, the performance of the container is good.

The polycycloolefine-copolymer containing polyethylene layer is provided in the structure layer of the container wall and the mechanical hardness of the paper layer is complemented and, the container shape is kept Therefore, the aspect of the container is good.

The polycycloolefine-copolymer containing polyethylene layer is excellent in the heat-resisting property. Even if it is the about 130-degree C high temperature, it does not cause any injury and any thermal hysteresis inside the container wall. Thus, it is the most suitable for the packaging container for autoclave treatment and retort processing.

Since the inside of the container and the container itself are protected in the polycycloolefine-copolymer containing polyethylene layer, even if the acidity of the content is strong, the barriers, e.g. the aluminum foil, are protected and the leakage from the container does not especially occur under the high temperature.

Due to the linear low-density-polyethylene layer obtained by the polymerization in the metallocene catalyst of the innermost layer of the laminate of this invention, the linear low-density-polyethylene layer and the polycycloolefine copolymer are mixed moderately and the mixtures seals the inside. The sealability of the container obtained from the packaging laminate can be improved.

In the linear low-density-polyethylene layer obtained by the polymerization by the metallocene catalyst of the innermost layer, when the container is formed by using the laminate of this invention, it excels unexpectedly in the openability, as well as the sealability.

The polycycloolefine copolymer layer of the container formed from the laminate of this invention has the very good humidity barrier, and the humidity barrier of the container is improved. The oxygen scavenging performance of the barrier layer in the inside of the polycycloolefine-copolymer layer can be protected. Perfect barrier ability can be added to the container with conjointly the oxygen barrier of the barrier layer in the inside the paper layer.

### Availability on Industry

The container of this invention is used as the containers, e.g. liquid foods, e.g. cow's milks, juices, coffees, and alcoholic beverages.

## Claims

1. A laminate for packaging material comprising
- an outer layer having at least a paper layer and
- an inner layer of a barrier layer, an adhesive layer and a linear low density polyethylene layer obtained by using a metallocene catalyst, wherein the linear low density polyethylene layer forms the innermost layer,
**characterized in that**
the laminate further comprises a polycycloolefin copolymer containing polyethylene layer placed between the adhesive layer and the linear low density polyethylene layer, wherein the polycycloolefin copolymer is a copolymer of polycycloolefin and ethylene and has 40 to 80 mole % of a polymer structural unit derived from the polycycloolefin, and **in that** the polycycloolefin copolymer containing polyethylene layer contains a polyethylene having a density of more than 0.910 (g/cm³), and a melt flow index of 5-25 (g/10 minutes).

2. The laminate for packaging material of claim 1,
**characterized in that that** the outer layer has a thermoplastic resin layer on the outside of the paper layer.

3. The laminate for packaging material of claim 1 or 2, **characterized in that that** the outer layer has a thermoplastic resin layer on the inside of the paper layer.

4. The laminate for packaging material of claim 1, 2 or 3, **characterized in that** the linear low density polyethylene layer comprises linear low density polyethylene having a density of 0.900-0.925 (g/cm³], a melt flow index of 10-20 (g/10 minutes), an a swell ratio of 1.4 or more.

## Patentansprüche

1. Laminat für Verpackungsmaterial, umfassend:
- eine äußere Schicht, die wenigstens eine Papierschicht aufweist, und
- eine innere Schicht aus einer Sperrschicht, einer Klebschicht und einer Schicht aus Polyethylen niedriger Dichte mit linearer Struktur (PE-LLD), die durch Verwendung eines Metallocen-Katalysators gewonnen wird, wobei die Schicht aus Polyethylen niedriger Dichte mit linearer Struktur (PE-LLD) die innere Schicht ausbildet,
**dadurch gekennzeichnet, dass**
das Laminat weiterhin eine polyzyklisches Olefin-Copolymer enthaltende Polyethylenschicht enthält, die zwischen der Klebschicht und der Schicht aus Polyethylen niedriger Dichte mit linearer Struktur (PE-LLD) angeordnet ist, wobei das polyzyklische Olefin-Copolymer ein Copolymer aus polyzyklischem Olefin und Ethylen ist und 40 bis 80 Mol-% einer aus dem polyzyklischen Olefin abgeleiteten Polymerstruktureinheit aufweist, und **dadurch**, dass die polyzyklisches Olefin-Copolymer enthaltende Polyethylenschicht ein Polyethylen enthält, das eine Dichte von mehr als 0,910 (g/cm³) und einen Melt-Flow-Index von 5 - 25 (g/10 Minuten) aufweist.

2. Laminat für Verpackungsmaterial aus Anspruch 1, **dadurch gekennzeichnet, dass** die äußere Schicht auf der Außenseite der Papierschicht eine Thermoplastschicht aufweist.

3. Laminat für Verpackungsmaterial aus Anspruch 1 oder 2, **dadurch gekennzeichnet, dass** die äußere Schicht auf der Innenseite der Papierschicht eine Thermoplastschicht aufweist.

4. Laminat für Verpackungsmaterial aus Anspruch 1, 2 oder 3, **dadurch gekennzeichnet, dass** die Schicht aus Polyethylen niedriger Dichte mit linearer Struktur (PE-LLD) ein Polyethylen niedriger Dichte mit linearer Struktur (PE-LLD) umfasst, das eine Dichte von 0,900 - 0,925 (g/cm³), einen Melt-Flow-Index von 10 - 20 (g/10 Minuten) und ein Strangaufweitungsverhältnis von 1,4 oder mehr aufweist.

## Revendications

1. Stratifié pour matériau d'emballage comprenant
- une couche externe possédant au moins une couche en papier et
- une couche interne constituée d'une couche-barrière, d'une couche adhésive et d'une couche de polyéthylène linéaire à basse densité obtenue grâce à l'utilisation d'un catalyseur métallocène, cas dans lequel la couche de polyéthylène linéaire à basse densité constitue la couche située le plus à l'intérieur,
**caractérisé en ce que**
le stratifié comprend en outre un copolymère à polycyclo oléfine renfermant une couche de polyéthylène laquelle est placée entre la couche adhésive et la couche de polyéthylène linéaire à basse densité, cas dans lequel le copolymère à polycyclo oléfine est un copolymère composé de polycyclo oléfine et d'éthylène et a un pourcentage molaire égal à 40 - 80% d'une unité structurale de polymère dérivée de la polycyclo oléfine et **en ce que** le copolymère à polycyclo oléfine renfermant la couche de polyéthylène contient un polyéthylène ayant une densité de plus de 0,910 (g/cm³) et un indice de fluage de 5 - 25 (g/10 minutes).

2. Le stratifié pour matériau d'emballage de la revendication 1, **caractérisé en ce que** la couche externe possède une couche de résine thermoplastique laquelle est prévue sur la face externe de la couche en papier.

3. Le stratifié pour matériau d'emballage de la revendication 1 ou 2, **caractérisé en ce que** la couche externe possède une couche de résine thermoplastique laquelle est prévue sur la face interne de la couche en papier.

4. Le stratifié pour matériau d'emballage de la revendication 1, 2 ou 3, **caractérisé en ce que** la couche de polyéthylène linéaire à basse densité comporte un polyéthylène linéaire à basse densité ayant une densité de 0,900 - 0,925 (g/cm³), un indice de fluage de 10 - 20 (g/10 minutes) et un rapport de gonflement de 1,4 ou davantage.
